# EUROPEAN PATENT SPECIFICATION

(11) **EP 1 136 856 B1**
(45) Date of publication and mention of the grant of the patent: **29.10.2003**
(21) Application number: 01302733.9
(22) Date of filing: 23.03.2001
(51) Int. Cl.: G02B 6/30

(54) **Optical waveguide device**
Optische Wellenleitervorrichtung
Dispositif de guide d'ondes optiques

(30) Priority: 24.03.2000 JP 2000084819
(43) Date of publication of application: 26.09.2001
(73) Proprietor: NGK INSULATORS, LTD., Nagoya-City, Aichi Prefecture 467-8530 (JP)
(72) Inventor: Ichigi, Takenori, NGK Insulators, Ltd., Nagoya-shi, Aichi-ken 467-8530 (JP)
(74) Representative: Paget, Hugh Charles Edward

(56) References cited:
- EP-A- 0 583 986
- EP-A- 0 636 909
- US-A- 5 214 726
- US-A- 5 914 972
- PATENT ABSTRACTS OF JAPAN vol. 014, no. 264 (P-1057), 7 June 1990 (1990-06-07) -& JP 02 073207 A (NIPPON TELEGR & TELEPH CORP), 13 March 1990 (1990-03-13)
- PATENT ABSTRACTS OF JAPAN vol. 016, no. 297 (E-1226), 30 June 1992 (1992-06-30) -& JP 04 079391 A (NEC CORP), 12 March 1992 (1992-03-12)

## Description

### BACKGROUND OF THE INVENTION

### FIELD OF THE INVENTION

The present invention relates to an optical waveguide device comprising: an optical waveguide substrate having an optical waveguide on a main surface of the substrate; ribbon shaped multiple optical fibers and a single optical fiber connected to this optical waveguide substrate; and a metallic package for sealing them hermetically.

### DESCRIPTION OF RELATED ART

Conventionally, an optical waveguide device utilized in optical fiber communication comprises: an optical waveguide substrate in which an optical waveguide is provided on a main surface of a substrate, made of LiNbO₃ (or lithium niobate), by thermally diffusing the metal such as Ti, and the optical waveguide consists of a plurality of the straight waveguide and one or more Y shaped branch waveguides or the like; ribbon shaped multiple optical fibers and a single optical fiber connected to this optical waveguide substrate at the two end faces of the optical waveguide substrate; and a metallic package to seal them hermetically. The ribbon shaped multiple optical fibers and a single optical fiber connected to the end faces of the optical waveguide substrate are secured in the package, and the optical waveguide substrate is supported by only the ribbon shaped multiple optical fibers and a single-core optical fiber.

The package to seal this optical waveguide substrate hermetically is often exposed under severe exterior environment. Specifically it is subjected to from a temperature as high as 85 °C to a temperature as low as -40 °C, and is subjected to highly humid environment. Thus, the optical waveguide device must be reliable under such severe environment. Thus, in such optical waveguide device, an optical fiber and an optical waveguide substrate, made of quartz or optical crystals such as LiNbO₃ or Si crystal, has the thermal expansion coefficient of 5 to 100 x 10⁻⁷, compared with 200 x 10⁻⁷ for the metallic package. Because of such thermal expansion coefficients, the optical waveguide substrate needs to be mounted in a metallic package with an unique structure. In such structure, the optical waveguide substrate, which is connected with ribbon shaped multiple optical fibers at the one end face and with a single optical fiber at another end face, is mounted in the metallic package indirectly by holding the fibers at the two remote ends of the package with the proper slackness on the fibers. Then, the thermal expansion differences among fibers and an optical waveguide substrate and a package are absorbed by the variation of the fiber slackness.

On the other hand, some optical waveguide devices realize active functions such as optical intensity modulation. In such devices, the functions are realized by loading the electrical signals on the optical waveguides. In such devices, the optical waveguide substrates have thin film metal electrodes on or around the waveguides to load the electrical signals on the optical waveguides, and in the metallic packages the electrical terminals and the terminals are wire-bonded to the electrodes on the optical waveguide substrates to load the electrical signals from the outside of the packages. However, the bonding wires between the electrodes on the optical waveguides and the electrical package may be broken when the device experiences vibration because the optical waveguide substrate is flexibly mounted on the package and can be moved by the vibration. In a package housing such optical waveguide substrate, when an optical waveguide is supported by only an optical fiber as described above, one end of the wire is fixed to the electrode pad of the package and thus no variation of the position relative to the package occurs, but the other end exists on the optical waveguide and thus, slight variation relative to the package can occur. Such state of one-end variation generates a stress, in particular, a repetitive stress at a delicate wire, which causes a variety of failures such as rupture of the wire or release from an electrode.

In order to prevent a failure generated at such wire, when a optical waveguide substrate itself is fixed to a package in order to set another end at which variation occurs to be fixed, a dimensional change caused by thermal expansion difference must be absorbed by a constituent element connecting portion or optical fiber itself in a limited space, i.e., at the inside of a package sealed with air tightness, the package housing members with their large thermal expansion difference as described previously. If no action is taken for weatherability, there has been concern for failure about optical fiber or the like.

Conventionally (see for example US-A-5 214 726 and JP-A-02-073207), there has been provided means for fixing a optical waveguide substrate to a package, and absorbing a dimensional change caused by a thermal expansion difference mainly using flexibility of an optical fiber. That is, in an optical fiber from a first end package sealing portion to an optical waveguide substrate and an optical fiber from the optical waveguide substrate to the other end package sealing portion, both of the optical fibers are connected to each other in a state they are not cut even in a state in which a dimensional difference is the largest. In a process in which such dimensional difference decreases, the excess of the optical fibers has been absorbed by its slackness.

However, although an optical fiber is flexible, the slackening quantity or range is required to be a permissible radium of curvature. In order to allow such an optical fiber connected to both sides of an optical waveguide substrate to be slack, a package is unavoidably large-sized to provide a slackening space. In addition, a connection portion between an optical fiber and a optical waveguide substrate is designed in consideration of shear force caused by slackness. In particular, a connection portion between a multiple optical fiber ribbon and an optical waveguide substrate is subjected to resilient force obtained by multiplying the number of cores when a fiber is slackened. Thus, design must be made in consideration of high strength as compared with a connection portion at the single core side, which causes a package to be large-sized.

Therefore, while all devices are required to be small-sized, only the package is unavoidably large-sized in order to ensure weatherability. There has been a growing demand for a small-sized package with its weatherability.

### SUMMARY OF THE INVENTION

It is an object of the present invention to provide an optical waveguide device smaller than a conventional optical waveguide devices in which a elongation difference between an optical fiber and a metal package caused by a thermal expansion difference inside of a package sealed hermetically can be adjusted more effectively, the optical waveguide device being more reliable to the vibration applied to the optical waveguide device.

According to the present invention, there is provided an optical waveguide device as set out in claim 1.

In this manner, even if thermal expansion occurs with an optical waveguide device exposed under severe environment, an elongation of a metallic package from the bottom end position of a support leg, at which the support leg is mounted on the package, to a position at which ribbon shaped multiple optical fibers is fixedly sealed in a package is primarily offset by an extension portion at the center of the support leg being extended by a thermal expansion equal to that of a metal package. Thus, stress is not substantially generated at a connection portion between the ribbon shaped multiple optical fibers and the optical waveguide substrate.. On the other hand, an extension of a metal package from the bottom end position of the support leg to the position at which a single fiber is fixedly sealed in the package is absorbed by decreasing the slackness of the single fiber.

In contrast, in the case where thermal shrinkage occurs due to the lowering of an environment temperature, a shrink of a metal package from the lower end position of the support leg to a position at which ribbon shaped multiple optical fibers is fixedly sealed in the package is primarily offset by an extension portion at the center of the support leg being contracted by a thermal shrinkage equal to the metal package. In this case as well, stress is not generated at a connection portion of the optical waveguide substrate. On the other hand, a shrink of a metal package from the bottom end portion of the support leg to a position at which a single fiber is fixedly sealed in the package is absorbed by increasing the slackness of the single fiber. Here, a shear stress is generated at a connection portion between a fiber and a substrate due to the slackness of the fiber. However, the shear stress is much weaker than the the stress being caused by the same slackness of the ribbon shaped multiple optical fibers.

In addition, in the case where two or more support legs are present, it is desirable that a spacer plate, in which the thermal expansion ratio is equal to the optical waveguide substrate, is provided on the top end surface of the plurality of support legs, and an optical waveguide substrate is mounted on the top surface of the spacer plate, thereby interposing a spacer plate between the support legs and the optical waveguide substrate. In this manner, the shear stress on the optical wavegiude substrate, which is caused by the dimensional mismatch between the thermal expansion of the substrate and the positional shift of the plurality of the top end of the support legs, is canceled in the spacer plate. Thus, distortion due to the shear stress in the optical waveguide substrate does not occur, and an optical signal degradation by the distortion dose not occur. This spacer plate is very effective when the optical waveguide substrate is made of the materials, in which the optical refractive index is sensitive for the stress, such as the InP based semiconductor waveguide chip; a dielectric (glass) waveguide chip employing a glass substrate; or strong dielectric crystal waveguide chip composed of LiNbO₃ or LiTaO₃ crystal or the like.

Preferably an extension portion at the center of the support leg is made of a material with its thermal expansion coefficient higher than that of a package, the material being easily processed. For example, an engineering plastics or metal is suitable. If the extension portion is sufficiently longer in the longitudinal direction of the ribbon shaped multiple optical fibers than the size of the top and bottom ends of the support leg, the top and bottom ends can be made of different materials which has appropreate adhesive or bonding properties. In addition, the bottom end of the support leg can be mounted on the bottom or side of the inner surface of the package. Further, the support leg may have a gap as large as the hight of the bottom end of the support leg, between the bottom surface of the extension portion and the inner surface of the package on which the end of the support leg is mounted. In contrast, the bottom end of the support leg may be eliminated, and the support leg is mounted on the package by the limited area in the bottom surface of the extension portion at the nearest edge to the single optical fiber. Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

### BRIEF DESCRIPTION OF THE DRAWINGS

The accompanying drawings, which are incorporated in and constitute a part of the specification, illustrate presently preferred embodiments of the present invention and, together with the general description given above and the detailed description of the preferred embodiments given below, serve to explain the principle of the present invention.

FIG. 1 is an illustrative view of a optical waveguide device according to the present invention; and

FIG. 2 is an illustrating view of a optical waveguide device according to another embodiment of the present invention.

### DETAILED DESCRIPTION OF THE EMBODIMENT

Reference will now be made in detail to the presently preferred embodiments of the invention as illustrated in the accompanying drawings, in which like reference numerals designate like or corresponding parts.

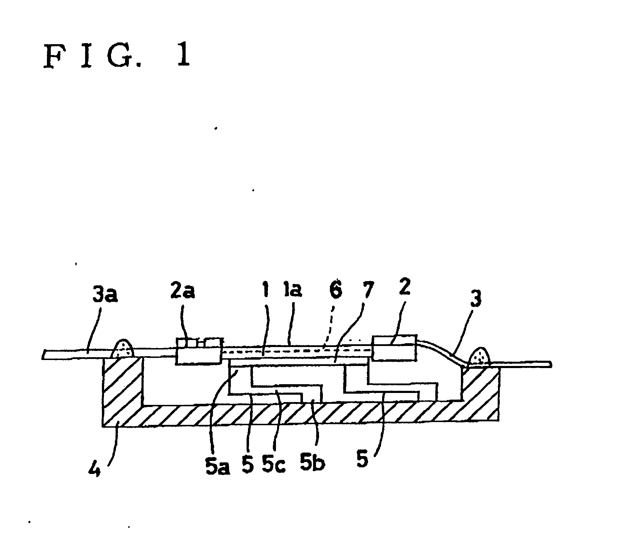

FIG. 1 schematically illustrates an optical waveguide device according to the present invention. This waveguide device consists of an optical waveguide substrate 1; and an optical fiber array, which consists of V-groove substrates 2 and 2a, a single-core fiber 3 and a ribbon-shaped fiber 3a; a metallic package 4; and a support leg 5 holding the optical waveguide substrate. An optical waveguide 6 is formed on a main surface 1a of the substrate 1 which is made of LiNbO₃ or LiTaO₃. This optical waveguide 6 consists of the straight waveguide, which starts at an endface of the substrate and connects to a Y shaped branch portion, and the Y shaped branch portion, and a pair of straight portions which connect to another end face of the substrate in servies. A pair of electrodes are deposited on or around the Y shaped branch portion to realize a optical signal modulation by applying the appropriate voltage.

Furthermore, various functions can be realized by cascading straight portions and the plurality of the Y shaped branch portions in a tree structure and depositing the electrodes on or around each Y shaped branch. The single optical fiber 3 and the ribbon shaped multiple optical fibers 3a mounted to the V-groove substrates 2 and 2a are inserted through the metallic package 4, and are connected to the outside.

A support leg 5 holds the optical waveguide substrate 1 with its top end 5a at the back surface of the substrate 1, and a bottom end 5b of the support leg 5 is mounted on the inner bottom surface of the package 4. An extension portion 5c, which locates between the top end 5a and bottom end 5b of the support leg 5, extends from the bottom end 5b to the top end 5a in parallel to the longitudinal direction of the ribbon shaped multiple optical fibers 3a. The thermal expansion of the ribbon shaped multiple fibers 3a from the sealed position on the package 4 to the connecting position to the optical waveguide substrate 1 is relatively smaller than the expansion of the package 4 from the sealed position with the fibers 3a to the connecting position of the fibers 3a to the optical waveguide substrate 1, but the expansion difference between the fibers 3a and the package 4 is cancelled by the large thermal expansion of the extension portion of the support leg 5c. Furthermore, the optical waveguide substrate 1 is mounted on the package 4 by the support leg 5. Thus, even if the optical waveguide device itself is vibrated in the vertical and transverse directions, as in the conventional manner, optical fiber disconnection or release and/or disconnection of a bonding wire (not shown) can be prevented.

In addition, a spacer plate 7, whose thermal expansion is equal to that of the optical waveguide substrate 1 made of LiNbO3 or LiTaO3, is interposed between the optical waveguide substrate 1 and two support legs 5. Thus, a shear stress, which is caused by the dimensional mismatch between the thermal expansion of the substrate 1 and the positional shift of the top ends of two support legs 5a, is canceled in the spacer plate 7.

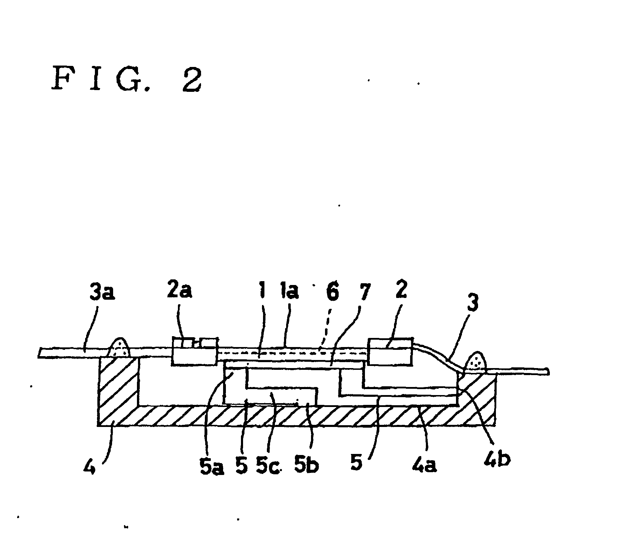

FIG. 2 shows another embodiment of the present invention, wherein the extension portion 5c can be mounted on the bottom surface 4a of the package 4 by a limited area 5b in the bottom surface of the support leg 5, and another support leg 5 can be mounted on the side surface 4b.

According to the present invention, there can be provided an optical waveguide device capable of more effectively adjusting the dimensional mismatch occurred by the thermal expansion among the optical fibers and an optical waveguide substrate and a metallic package, and effective against vibration applied to the optical waveguide device, and of smaller size.

Additional advantages and modifications will readily occur to those skilled in the art. Therefore, the invention in its broader aspect is not limited to the specific details and representative embodiments shown and described herein.

## Claims

1. An optical waveguide device comprising:
an optical waveguide substrate (1) having an optical waveguide (6) on a main surface (1a) of the substrate (1);
multiple optical fibers (3a) arranged in ribbon shape and a single optical fiber (3) connected to said optical waveguide substrate (1);
a metallic package (4) sealed to the multiple optical fibers (3a) and single optical fiber (3); and
a support (5) mounting the optical waveguide substrate (1) on the metallic package (4),
**characterized in that** the support (5) is in the form of a leg having a first end (5a) holding the optical waveguide substrate (1), a second end (5b) mounted on the inner surface of the metallic package (4) and an intermediate portion (5c) extending from said second end (5b) to said first end (5a) in the longitudinal direction of said multiple optical fibers (3a) so as to provide compensation for thermal expansion mismatch between the multiple optical fibers (3a) and the metallic package.

2. An optical waveguide device according to claim 1, wherein the longitudinal direction of said intermediate portion (5c) from said second end (5b) to said first end (5a) is in the direction towards said multiple optical fibers (3a).

3. A optical waveguide device as claimed in claim 1, having a plurality of said support legs (5) and a spacer plate mounted at said first ends (5a) of the plurality of support legs, and wherein the optical waveguide substrate (1) is mounted on the other surface of the spacer plate from said first ends (5a) of the support legs.

## Patentansprüche

1. Optische Wellenleitervorrichtung, umfassend:
ein optisches Wellenleitersubstrat (1), das einen optischen Wellenleiter (6) auf einer Hauptfläche (1a) des Substrats (1) aufweist;
mehrfache optische Fasern (3a), die in Bandform angeordnet sind, und eine einzelne optische Faser (3), die mit dem optischen Wellenleitersubstrat (1) verbunden ist;
einen Metallkörper (4), der dicht mit den mehrfachen optischen Fasern (3a) und der einzelnen optischen Faser (3) verbunden ist; und
einen Träger (5), mit dem das optische Wellenleitersubstrat (1) auf dem Metallkörper (4) angebracht ist,
**dadurch gekennzeichnet, dass** der Träger (5) in Form eines Schenkels vorliegt, der ein erstes Ende (5a), das das optische Wellenleitersubstrat (1) hält, ein zweites Ende (5a), das auf der Innenfläche des Metallkörpers (4) angebracht ist, und einen Zwischenabschnitt (5c) aufweist, der sich in Längsrichtung der mehrfachen optischen Fasern (3a) vom zweiten Ende (5b) zum ersten Ende (5a) erstreckt, um die Fehlanpassung durch Wärmeausdehnung zwischen den mehrfachen optischen Fasern (3a) und dem Metallkörper zu kompensieren.

2. Optische Wellenleitervorrichtung nach Anspruch 1, worin die Längsrichtung des Zwischenabschnitts (5c) vom zweiten Ende (5b) zum ersten Ende (5a) in Richtung zu den mehrfachen optischen Fasern (3a) hin verläuft.

3. Optische Wellenleitervorrichtung nach Anspruch 1, die eine Vielzahl von Stützschenkeln (5) und eine Abstandshalterplatte aufweist, die an den ersten Enden (5a) der Vielzahl von Stützschenkeln angebracht ist, und worin das optische Wellenleitersubstrat (1) an der anderen Fläche der Abstandshalterplatte von den ersten Enden (5a) der Stützschenkel angebracht ist.

## Revendications

1. Dispositif de guide d'ondes optiques comprenant:
un substrat de guide d'ondes optiques (1) présentant un guide d'ondes optiques (6) sur une surface principale (1a) du substrat (1) ;
de multiples fibres optiques (3a) agencées en forme de ruban et une fibre optique unique (3) connectée audit substrat de guide d'ondes optiques (1);
un boîtier métallique (4) scellé aux fibres optiques multiples (3a) et à la fibre optique unique (3); et
un support (5) permettant le montage du substrat du guide d'ondes optiques (1) sur le boîtier métallique (4),
**caractérisé en ce que** le support (5) se présente sous la forme d'une branche présentant une première extrémité (5a) retenant le substrat de guide d'ondes optiques (1), une seconde extrémité (5b) montée sur la surface intérieure du boîtier métallique (4) et une portion intermédiaire (5c) s'étendant depuis ladite seconde extrémité (5b) à ladite première extrémité (5a) dans la direction longitudinale desdites fibres optiques multiples (3a) de manière à permettre une compensation d'une désadaptation de dilation thermique entre les fibres optiques multiples (3a) et le boîtier métallique.

2. Dispositif de guide d'ondes optiques selon la revendication 1, où la direction longitudinale de ladite portion intermédiaire (5c) depuis ladite seconde extrémité (5b) à ladite première extrémité (5a) s'étend dans la direction vers lesdites fibres optiques multiples (3a).

3. Dispositif de guide d'ondes optiques selon la revendication 1, comportant plusieurs desdites branches de support (5) et une plaque d'espacement installée auxdites premières extrémités (5a) de la pluralité de branches de support et où le substrat de guide d'ondes optiques (1) est monté sur l'autre surface de la plaque d'espacement depuis lesdites premières extrémités (5a) des branches de support.
